# EUROPÄISCHE PATENTANMELDUNG

(11) **EP 0 670 198 A1**
(43) Veröffentlichungstag der Anmeldung: **06.09.1995**
(21) Anmeldenummer: 95100756.6
(22) Anmeldetag: 20.01.1995
(51) Int. Cl.: B23Q 7/18, B23Q 7/05

(54) **Bearbeitungsmaschine für Stangen**

(30) Priorität: 03.03.1994 CH 623/94
(71) Anmelder: MABI AG, CH-5200 Windisch (CH)
(72) Erfinder: Biland, Max, CH-5200 Windisch (CH)
(74) Vertreter: Fillinger, Peter, Dr.

(57) **Zusammenfassung**

Die Bearbeitungsmaschine weist Einspannmittel (7, 7'; 8, 8') um eine zu bearbeitende Stange (11) achsial zu einer Einspannachse (4) einzuspannen sowie ein gegen die Einspannachse (4) bewegbares Bearbeitungswerkzeug (17) auf. Um möglichst viele Stellen der Stangenoberfläche ohne Umspannen der Stange dem Bearbeitungswerkzeug zugänglich zu machen ist vorgesehen, dass das Bearbeitungswerkzeug (17) am Maschinengehäuse (1) zusätzlich quer zur Einspannachse (4) verschiebbar gelagert ist.

## Beschreibung

Die vorliegende Erfindung bezieht sich auf eine Bearbeitungsmaschine nach dem Oberbegriff des Anspruchs 1.

Bei Bearbeitungsmaschinen der genannten Art müssen die Stangen für Bearbeitungsoperationen an um die Stangenachse verteilten Stellen aus der Spannvorrichtung gelöst, um die Längsachse gedreht und neu eingespannt werden. Die Beseitigung dieses Nachteils ist der Zweck der vorliegenden Erfindung.

Erfindungsgemäss wird diese Aufgabe gelöst durch die kennzeichnenden Merkmale des Anspruchs 1.

Anhand der beiliegenden schematischen Zeichnung wird die Erfindung beispielsweise erläutert. Es zeigen:
Fig. 1 eine perspektivische Ansicht einer Bearbeitungsmaschine,
Fig. 2 ein Detail zu Fig. 1 in Perspektive,
Fig. 3 eine Draufsicht auf die Trommel und
Fig. 4 einen Schnitt längs der Linie IV-IV.

Im Inneren des Gehäuses 1 einer Bearbeitungsmaschine sind front- und rückseitig je drei oder mehr frei drehbare Lagerrollen 2 angeordnet, an denen je ein Ring 3, 3' achsial und drehbar um eine Einspannachse 4 gelagert ist. Die Ringe 3, 3' sind fest mit einem kubusförmigen Trommelgehäuse 5 verbunden und bilden mit diesem eine Trommel 6. In der Trommel 6 sind, wie später beschrieben, zwei erste Walzenpaare 7, 7' und zwei zweite Walzenpaare 8, 8' angeordnet, die durch je zwei parallele, zur Einspannachse 4 quer orientierte Walzen 70, 71, 70', 71' bzw. 80, 80', 81, 81' gebildet sind. Der Trommel 6 ist ein Motor 9 zugeordnet, der mittels eines Zahnriemens 10, einer Kette oder aequivalenten Kraftübertragungsorganen getrieblich mit dem vorderen Ring 3 verbunden ist und die Trommel 6 wahlweise vor-und rückwärts antreibt (Pfeil 13).

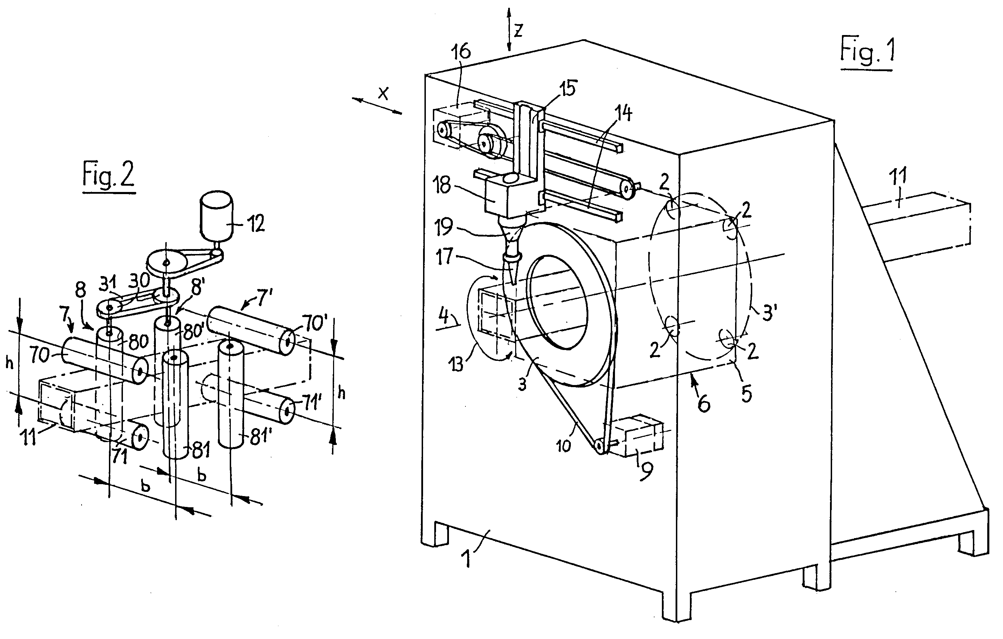

Die Abstände "b" und "h" (Fig. 2) der Walzen der beiden Walzenpaare 7, 7' bzw. 8, 8' sind mit Bezug auf die Einspannachse 4 symmetrisch verstellbar, so dass durch ein Zusammendrücken der Walzen eine dazwischen liegende Stange durch zur Einspannachse 4 radiale Kräfte eingespannt werden kann. Die Walzen 80, 80' der zweiten Walzenpaare 8, 8' sind von einem Motor 12 antreibbar. Je nach seiner Drehrichtung kann mit ihm die Stange 11 in Richtung der Einspannachse 4 vor- und rückwärts verschoben werden, wobei sich die übrigen, nicht angetriebenen Walzen (70, 71, 70', 71', 81, 81') ohne Beeinträchtigung der Einspannkraft freilaufend mitdrehen.

Auf gehäusefesten, zur Einspannachse 4 quer orientierten Führungsschienen 14 ist ein Werkzeugschlitten 15 mittels eines Motors 16 geradlinig verschiebbar (Pfeil X). Im bzw. am Werkzeugschlitten 15 sind ein Bearbeitungswerkzeug 17 und ein Achsialantrieb 18 und gegebenenfalls ein Drehantrieb 19 vorhanden, mit denen das Bearbeitungswerkzeug 17 gegen die Einspannachse 4 und von dieser weg bewegbar ist (Pfeil Z) bzw. das Werkzeug um seine Längsachse (Pfeil Z) gedreht werden kann, wenn es ein Bohrer, Fräser oder dgl. ist. Ist das Bearbeitungswerkzeug eine Laserquelle, können der Achsialantrieb 18 und der Drehantrieb 19 entfallen. Durch ein Betätigen der Motoren 9, 12, und 16 kann das Bearbeitungswerkzeug 17 an jeder Oberflächenstelle einer Stange 11 unabhängig von deren Querschnittprofil zum Einsatz gebracht werden.

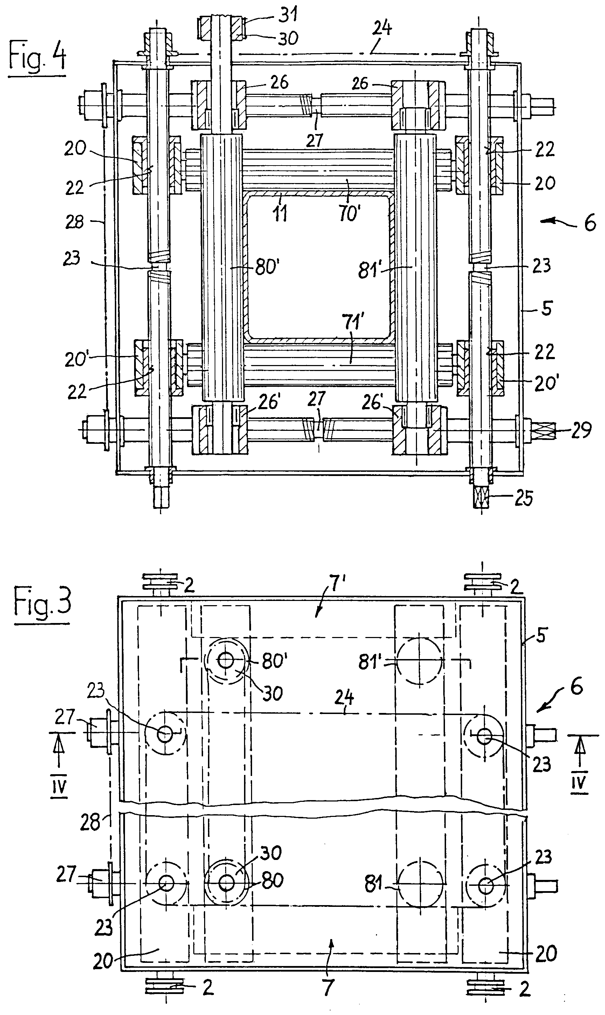

Die Fig. 3 und 4 zeigen den Aufbau der Trommel 6. Die Walzen 70, 70', 71, 71' der beiden ersten Walzenpaare 7, 7' sind endseits in vier im Trommelgehäuse 5 untergebrachten balkenförmigen Drehlagern 20, 20' drehbar gelagert, welche sich parallel zur Einspannachse 4 erstrecken und radialsymmetrisch um diese verteilt sind. Jedes der Drehlager 20, 20' ist mit je zwei Muttergewinden 22 an zwei im Trommelgehäuse 5 drehbaren Spindeln 23 gelagert, die in Längsrichtung in zwei gegenläufige Gewindeabschnitte unterteilt sind. Von den vier Drehlagern 20, 20' sind zwei (20) auf den Spindelabschnitten mit dem Gewinde und zwei (20') auf jenen mit dem Gegengewinde gelagert, so dass sich bei gleichmassigem und gleichgerichtetem Drehen der Spindeln 23 die Drehlager 20, 20' symmetrisch mit Bezug auf die Einspannachse von- oder gegeneinander bewegen. Dem synchronen und gleichgerichteten Spindelantrieb dient ein Kettentrieb 24 (oder ein endloser Zahnriemen), der um mit den Spindeln 23 drehfest verbundene Kettenräder (oder Zahnriemenräder) herumgeführt ist. Zu deren Betätigung ist eine der Spindeln 23 (Fig. 4 rechts unten) mit einem Vierkantzapfen 25 versehen, an den eine Handkurbel ansetzbar ist. Mittels der Handkurbel wird der Abstand "h" der Walzen 70, 70', 71, 71' dem Profil einer Stange 11 angepasst. Anstelle einer Handkurbel kann an den Vierkantzapfen 25 auch ein Luft- oder Elektromotor angekuppelt sein.

Die zweiten Walzenpaare 8, 8' sind analog den ersten an vier zur Einspannachse 4 parallelen und radialsymmetrisch um diese verteilen, balkenförmigen Drehlagern 26, 26' drehbar gelagert. Jeweils zwei der Drehlager 26, 26' sind mit entsprechenden Muttergewinden auf zwei von vier Spindeln 27 gelagert. Die zu den Spindeln 23 quer orientierten Spindeln 27 weisen wie jene Spindeln 23 zwei Gewindeabschnitte mit gegenläufigen Gewinden auf, so dass sich die Drehlager 26, 26' bei gleichzeitigem und gleichgerichtetem Drehen der Spindeln 27 symmetrisch zur Einspannachse 4 gegen bzw. voneinander bewegen. Dem synchronen und gleichgerichteten Antrieb der Spindeln 27 dient ein Ketten- oder Riementrieb 28 und ein an einer der Spindeln 27 angeformter Vierkantzapfen 29, an dem eine Handkurbel ansetzbar ist. Mittels der Handkurbel kann der Abstand "b" der Walzen 80, 81 bzw. 80', 81' mit Bezug auf die Einspannachse 4 symmetrisch verstellt und dem Querschnittprofil einer Stange angepasst werden.

Die beiden Walzen 80, 80' der Walzenpaare 8, 8' sind mit je einem Ende durch das Trommelgehäuse 5 hindurchgeführt. Auf diesen Enden sitzt je ein Ketten- oder Riemenzahnrad 30, mit denen eine Endloskette oder ein endloser Zahnriemen 31 kämmt. Eines der Zahnriemenräder 30 ist (wie in Fig. 2 sichtbar) vom am Trommelgehäuse 5 befestigten Motor 12 angetrieben, der wie vorerwähnt je nach Drehrichtung die Walzen 80, 80' antreibt und eine Stange 11 vor- oder zurückschiebt.

In die beschriebene Einspann- und Vorschubeinrichtung kann jede Stange, unabhängig von ihrem Querschnittprofil, eingespannt und in Längsrichtung vorgeschoben und um ihre Längsachse gedreht werden. In Verbindung mit dem beweglichen, quer zur Einspann- bzw. Vorschubachse 4 verfahrbaren Werkzeugschlitten 15 kann jeder Punkt der Stangenoberfläche in den Wirkbereich des Bearbeitungswerkzeugs 17 gebracht werden. Die Einzelantriebe 9, 12, 16, 18, 19 eignen sich in Verbindung mit einer Rechnersteuerung zur vollständigen Automatisierung des Bearbeitungsvorganges. Im Bedarfsfall ist es auch möglich, anstelle der Vierkantzapfen 25 und 29 motorische Einzelantriebe vorzusehen und die Kalibrierung der Einspann- und Vorschubeinrichtung der Rechnersteuerung zu unterstellen.

## Patentansprüche

1. Bearbeitungsmaschine für Stangen mit Einspannmitteln (7, 7'; 8, 8'), um eine zu bearbeitende Stange (11) achsial zu einer Einspannachse (4) einzuspannen und mit einem gegen die Einspannachse (4) bewegbaren Bearbeitungswerkzeug (17), dadurch gekennzeichnet, dass das Bearbeitungswerkzeug (17) am Maschinengehäuse (1) zusätzlich quer zur Einspannachse (4) verschiebbar gelagert ist.

2. Bearbeitungsmaschine nach Anspruch 1, dadurch gekennzeichnet, dass die Einspannmittel (7, 7'; 8, 8') symmetrisch zur Einspannachse (4) wirksam sind.

3. Bearbeitungsmaschine nach Anspruch 2, dadurch gekennzeichnet, dass die Einspannmittel (7, 7'; 8, 8') radial symmetrisch zur Einspannachse (4) angeordnet sind.

4. Bearbeitungsmaschine nach einem der Ansprüche 1 bis 3, dadurch gekennzeichnet, dass die Einspannmittel (7, 7'; 8, 8') mit gegenseitigem Abstand in Richtung der Einspannachse (4) mindestens ein erstes und mindestens ein zweites Paar paralleler Walzen (7, 7'; 8, 8') aufweisen, und dass die Achsen des ersten Walzenpaares (7, 7') gegenüber den Achsen des zweiten Walzenpaares (8, 8') um 90° um die Einspannachse (4) versetzt angeordnet sind.

5. Bearbeitungsmaschine nach einem der Ansprüche 1 bis 4, dadurch gekennzeichnet, dass achsial zur Einspannachse (4) im Maschinengestell eine Trommel (6) drehbar gelagert ist, und dass die Walzenpaare (7, 7'; 8, 8') in der Trommel (6) angeordnet sind.

6. Bearbeitungsmaschine nach Anspruch 5, dadurch gekennzeichnet, dass die Walzen (7, 7'; 8, 8') endseits in Drehlagern (20, 20'; 26, 26') drehbar gelagert sind und der Abstand der Drehlager eines Walzenpaares (7, 7'; 8, 8') symmetrisch zur Einspannachse (4) verschiebbar ist.

7. Bearbeitungsmaschine nach Anspruch 6, dadurch gekennzeichnet, dass jedem Walzenpaar (7, 7'; 8, 8') zwei symmetrisch zur Einspannachse (4) liegende, parallele und in der Trommel (6) drehbar gelagerte Spindeln (23, 27) zugeordnet sind, dass die Spindeln (23, 27) in Längsrichtung in einen Teil mit einem Gewinde und in einen Teil mit einem Gegengewinde unterteilt sind, und dass die an einem Walzenende vorhandenen Drehlager (20, 20', 26, 26') mit einem Muttergewinde (22) auf einem Spindelteil mit dem Gewinde und die am anderen Walzenende vorhandenen Drehlager (20, 20'; 26, 26') mit einem Muttergewinde auf einem Spindelteil mit einem Gegengewinde aufgeschraubt sind.

8. Bearbeitungsmaschine nach Anspruch 7, dadurch gekennzeichnet, dass die Spindeln (23, 27) der ersten und der zweiten Walzenpaare (7, 7'; 8, 8') je unter sich getrieblich verbunden (24, 28) und mit einem ersten bzw. zweiten Antrieb (25, 29) versehen sind.

9. Bearbeitungsmaschine nach einem der Ansprüche 4 bis 9, dadurch gekennzeichnet, dass von mindestens einem der Walzenpaare (7, 7'; 8, 8') eine der Walzen (80, 80') mit einem dritten Antrieb (12) getrieblich verbunden ist.

10. Bearbeitungsmaschine nach einem der Ansprüche 5 bis 9, dadurch gekennzeichnet, dass die Trommel (6) getrieblich mit einem vierten Antrieb (9) verbunden ist.

11. Bearbeitungsmaschine nach einem der Ansprüche 1 bis 10, dadurch gekennzeichnet, dass dem Bearbeitungswerkzeug (17) zusätzlich ein fünfter Antrieb (16) für eine zur Einspannachse (4) quer orientierte Verschiebung zugeordnet sind.

12. Bearbeitungsmaschine nach einem der Ansprüche 8 bis 11, dadurch gekennzeichnet, dass die Antriebe (9, 12, 16, 18, 19) für das Bearbeitungswerkzeug (17), die Walzen (80, 80') und die Trommel (6) rechnergesteuert sind.
